# EUROPEAN PATENT APPLICATION

(11) **EP 4 505 865 A1**
(43) Date of publication of application: **12.02.2025**
(21) Application number: 24193694.7
(22) Date of filing: 08.08.2024
(51) Int. Cl.: A01G 9/14, A01G 9/24

(54) **GREENHOUSE FOR CULTIVATING PLANTS AND PROCESS FOR INSTALLING SAID GREENHOUSE**

(30) Priority: 11.08.2023 IT 202300017262
(71) Applicant: Gruppo Green Design Srl, 36022 Cassola (VI) (IT)
(72) Inventor: PERON, Andrea, 36020 Solagna (VI) (IT)
(74) Representative: Gallo, Luca

(57) **Abstract**

Greenhouse (1) for cultivating plants, which comprises a support framework (2), intended to be fixed to the ground and provided with pitched roofs (23, 24) tilted with respective opposite tilt angles (α1, α2), and a plurality of transparent or translucent cover panels (3), fixed to the support framework (2) at least to cover one of the pitched roofs (23).

In addition, the greenhouse (1) comprises energy supply means (4), comprising at least one photovoltaic module (41), mounted on the other of the pitched roofs (24), and water recovery means (5), for recovering rainwater, and/or water extraction means (50), for extracting water from an aquifer (F).

In addition, the greenhouse (1) comprises an irrigation plant (6), connected to the water recovery means (5) and/or to the water extraction means (50), a heating plant (7) and a ventilation plant (8), power supplied by the energy supply means (4), and an environment control system (9), comprising at least one internal temperature sensor (91) and an internal humidity sensor (92).

The greenhouse (1) also comprises a logic control unit (90), which is placed in data connection with the environment control system (9), the heating plant (7) and the ventilation plant (8) and is configured for controlling the latter on the basis of the data received from the environment control system (9).

## Description

### Field of application

The present finding regards a greenhouse for cultivating plants and a process for installing such greenhouse, according to the preamble of the respective independent claims.

The present greenhouse is advantageously intended to be employed for housing one or more cultivations, directly conducted on the ground or in vases, of plants, such as for example vegetables, fruit plants, flowers or ornamental plants.

The present greenhouse is also advantageously intended to be self-sufficient at least in terms of energy and water supply.

The present greenhouse and installation process are therefore inserted in the industrial field of production of structures and buildings for agriculture and horticulture.

### State of the art

Known in the field of structures set for agriculture and horticulture are greenhouses employed for cultivating plants of different type, such as for example vegetables, fruit trees, generally with small sizes, or ornamental plants or flowers.

Such greenhouses generally have quite simple structure and are provided with a plurality of metal sections, generally hollow and with circular section, fixed to each other in order to constitute a support framework provided with a lower portion with prismatic shape with rectangular base and with an upper portion with pitched roofs that are tilted or are vaulted roofs.

In addition, the greenhouses are provided with cover sheets, which are mounted on the support framework, externally thereto, and fixed to the metal sections of the latter by means of coupling elements, such as for example brackets or metal listels, and possibly with tensioning elements. The cover sheets are made of flexible material and are generally transparent or translucent, in a manner such to allow sunlight to pass within the greenhouse. In addition, such cover sheets can be removable in order to allow portions of the support framework to remain uncovered and hence allow the ventilation therethrough.

Over the years, in order to render the covers more durable and resistant, in particular with weathering agents, such as the wind, the rain and the load of the snow, the cover sheets were substituted with rigid cover panels, also transparent or translucent, e.g. made of plastic material or glass.

The greenhouses described up to now have in practice demonstrated that they do not lack drawbacks.

A first drawback lies in the fact that such greenhouses do not allow the continuous cultivation of the same plant type, since the environmental conditions within the same, in particular the temperature, even if mitigated by the presence of the cover, are still influenced by the environmental conditions outside the greenhouse and therefore they are not constant over time. Consequently, in multiple periods of the year it is necessary to remove the plants cultivated in the greenhouse and pause the cultivation work, or replace these plants with others, converting the use destination of the greenhouse. Such operations consequently increase the nonuse time of the greenhouse and the management costs of the same.

A further drawback lies in the fact that the cultivations in such greenhouses often require significant amounts of water and energy, increasing the cultivation production costs. In addition, for the same reason, the management of such greenhouses involves a high environmental impact.

In order to resolve the abovementioned drawbacks, and in particular in order to render the cultivation within such greenhouses more productive and continuous, greenhouses have included lighting plants, heating plants or other utilities.

Nevertheless, none of the presently employed solutions is capable of completely and effectively solving the abovementioned problems, still requiring fairly long inactivity times and the removal or change of the cultivation within the greenhouse.

In addition, the use of such utilities requires a great amount of energy, consequently further increasing the management costs.

### Presentation of the invention

In this situation, the problem underlying the present invention is therefore that of overcoming the drawbacks manifested by the solutions of known type discussed above, by providing a greenhouse for cultivating plants which allows the prolonged cultivation of the same plant independent of external environmental factors.

Another object of the present invention is to provide a greenhouse for cultivating plants, in which the cultivation requires low or no water or energy supply, i.e. a greenhouse which is advantageously self-sufficient with regard to energy and water.

Another object of the present invention is to provide a greenhouse for cultivating plants, which has low environmental impact.

Another object of the present invention is to provide a greenhouse for cultivating plants, which is inexpensive to manage and durable over time.

Another object of the present invention is to provide a greenhouse for cultivating plants, which is simple to manage and control.

Another object of the present invention is to provide a method for installing the greenhouse, which is simple and inexpensive to actuate.

### Brief description of the drawings

The technical characteristics of the invention, according to the aforesaid objects, are clearly seen in the contents of the below-reported claims and the advantages thereof will be more evident in the following detailed description, made with reference to the enclosed drawings, which represent several merely exemplifying and non-limiting embodiments of the invention, in which:
- figure 1 shows a perspective view of the greenhouse, object of the present invention, in accordance with a first embodiment variant of the preferred embodiment;
- figure 2 shows a perspective front view of the greenhouse of figure 1, in which several elements were removed in order to render others more visible;
- figure 3 shows a perspective view of the greenhouse according to the invention, in accordance with a second embodiment variant of the preferred embodiment;
- figure 4 shows a perspective view from a further viewpoint of the greenhouse of figure 3;
- figure 5 shows a plan view of the greenhouse of figure 3;
- figure 6 shows a front section view of the detail M indicated in figure 5;
- figure 7 shows a perspective front view of the greenhouse of figure 3, in which water extraction means are highlighted;
- figure 8 shows a side section view of the detail M indicated in figure 5, in which water extraction means, water recovery means and part of an irrigation plant are highlighted;
- figure 9 shows a rear view of the greenhouse of figure 3;
- figure 10 shows a schematic representation of the greenhouse in accordance with the preferred embodiment, with the data connections between the different utilities and a logic control unit indicated.

### Detailed description of a preferred embodiment

With reference to the enclosed drawings, reference number 1 indicates the greenhouse for cultivating plants, object of the present invention.

The present greenhouse 1 is advantageously intended to be employed for housing at its interior one or more cultivations of plants, such as for example vegetables, fruit plants, flowers or ornamental plants. Such cultivations can be conducted directly on the ground, i.e. on the terrain on which the greenhouse is intended to be fixed, or in a vase.

The greenhouse 1 according to the invention comprises a support framework 2, which is intended to be fixed to the ground, defines an internal volume V and comprises a first side 21 and a second side 22, extended substantially perpendicular to the ground and parallel to each other and to a main extension direction X.

More in detail, the support framework 2 comprises at least two first support uprights 210, each of which extended between a first lower end 211 thereof, intended to be fixed to the ground, and an opposite first upper end 212, and defining between them the aforesaid first side 21. In addition, the support framework 2 advantageously also comprises at least one first intermediate upright 210' placed between the first support uprights 210 and parallel thereto. Advantageously, the support framework 2 also comprises at least two second support uprights 220, each of which extended between a second lower end 221 thereof, intended to be fixed to the ground, and an opposite second upper end 222, and defining between them the second side 22. In addition, the support framework 2 advantageously also comprises at least one second intermediate upright 220' placed between the first support uprights 220 and parallel thereto. Advantageously, in addition, the support framework 2 comprises at least one first lateral crosspiece 25 and one second lateral crosspiece 26, placed parallel to each other and placed to respectively connect the first upper ends 212 of the first support uprights 210 and the second upper ends 222 of the second support uprights 220.

According to the invention, the support framework 2 of the greenhouse 1 also comprises a first pitched roof 23, which is extended from the first side 21 and is tilted with a first tilt angle α1, and a second pitched roof 24, which is extended from the second side 22 and is tilted with a second tilt angle α2.

In particular, the first pitched roof 23 and the second pitched roof 24 are tilted towards each other and the first tilt angle α1 is opposite the second tilt angle α2.

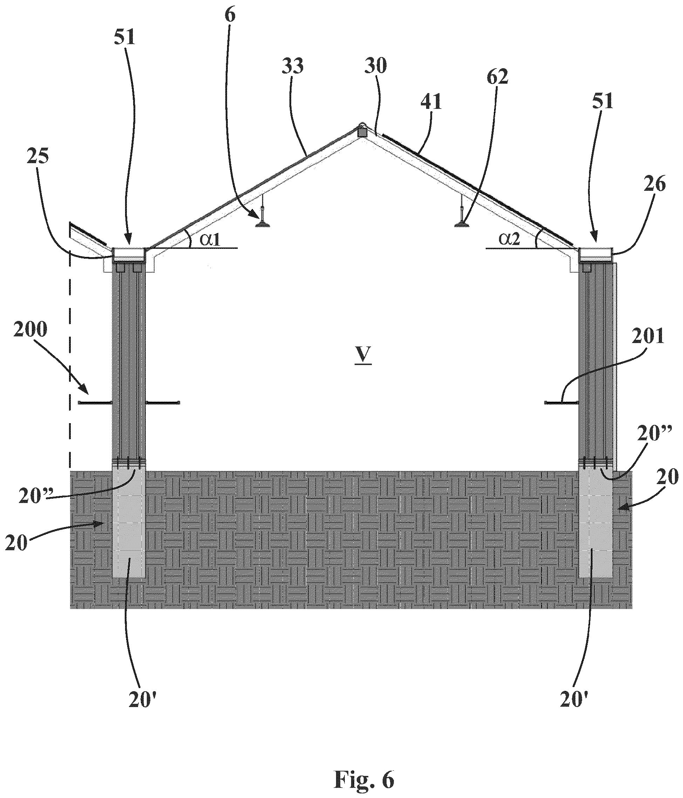

Preferably, the first tilt angle α1 is comprised between 20 and 40° and still more preferably is about 30°. Preferably, in addition, the second tilt angle α2 is comprised between 20 and 40° and still more preferably is about 30°. The tilt angles α1, α2 will suitably be intended as measured with respect to the horizon, i.e. the angles formed between the extensions of the planes of the roofs 23, 24 and the ground, as illustrated in figure 6.

More in detail, the support framework 2 comprises at least two first tilted profiles 27, mechanically connected to the first lateral crosspiece 25 and defining the first pitched roof 23. Preferably, the support framework 2 also comprises at least one first tilted intermediate profile 27' interposed between the first tilted profiles 27 and parallel thereto. In particular, the first tilted intermediate profile 27' is extended substantially starting from the corresponding first intermediate upright 210'.

The support framework 2 also advantageously comprises at least two second tilted profiles 28, mechanically connected to the second lateral crosspiece 26 and defining the second pitched roof 24. Preferably, the support framework 2 also comprises at least one second tilted intermediate profile 28' interposed between the second tilted profiles 28 and parallel thereto. In particular, the second tilted intermediate profile 28' is extended substantially starting from the corresponding second intermediate upright 220'.

In particular, the presence of the intermediate uprights 210', 220' and of the tilted intermediate profiles 27', 28' advantageously allows rendering the support framework 2 more resistant, in particular if large size.

The support framework 2 also advantageously comprises at least one top crosspiece 29, placed at the meeting of the first pitched roof 23 and the second pitched roof 24, parallel to the main extension direction X, and in particular supported by the first tilted profiles 27 and by the second tilted profiles 28.

In particular, the various parts of the support framework 2 are fixed together by means of screws and/or brackets that are per se known in the field and therefore not described in detail hereinbelow.

Advantageously, at least part of the support framework 2 (i.e. at least several between the uprights 210, 210', 220, 220', the crosspieces 25, 26, the tilted profiles 27, 27', 28, 28' and the top crosspiece 29) is attained by means of hollow profiles made of metal, preferably aluminum, in particular with square or rectangular section. Preferably, the support framework 2 is completely attained with hollow aluminum profiles.

In this manner, one obtains a support framework 2, which, due to the life-cycle of such material, generates reduced environmental impact. Indeed, aluminum represents an optimal compromise between ease of storage, quality, installation speed and duration over time. In addition, such material has further advantageous qualities such as lightness, ductility, considerable resistance to oxidation and recyclability.

In order to fix the support framework 2 to the ground, preferably directly to the latter without the use of concrete foundations, the greenhouse 1 comprises a plurality of fixing elements 20, comprising an elongated body 20' intended to be planted in the ground, and an upper plate 20", to which it is fixed, e.g. by means of screws and bolts, the support framework 2, and in particular the lower end 211, 221 of a corresponding first support upright 210 thereof, first intermediate upright 210', second support upright 220 or second intermediate upright 220'. In particular, each aforesaid lower end 211, 221 comprises a respective lower plate in order to allow an easier fixing of the support framework 2.

Advantageously, such fixing elements 20 are designed with a length depending on the type of ground on which said greenhouse 1 is intended to be mounted.

Advantageously, in addition, the fixing elements 20 are made of metal, preferably of galvanized steel. In order to prevent the generation of electrolyte currents between the metal components made of different material, the greenhouse 1 advantageously comprises a plurality of plates made of plastic material (not illustrated in the figures), each interposed between the corresponding upper plate 20" of the fixing element 20 and the support framework 2, in particular the lower end 211, 221 of its corresponding first support upright 210, first intermediate upright 210', second support upright 220 or second intermediate upright 220'. According to the invention, the greenhouse 1 comprises a plurality of transparent or translucent cover panels 3, fixed to the support framework 2 at least to cover the first pitched roof 23 and at least one between the first side 21 and the second side 22.

More in detail, the cover panels 3 are fixed, for example by means of screws and/or brackets, at least to the first tilted profiles 27 and to the first support uprights 210 and/or second support uprights 220.

In addition, the cover panels 3 are preferably placed to completely cover the first tilted profiles 27 and the first support uprights 210 and/or second support uprights 220. In this manner, by completely covering the support framework 2, an optimal insulation of the internal volume V is obtained, allowing the elimination of possible heat bridges.

Advantageously, the plurality of cover panels 3 comprises at least one first lateral panel 31 fixed to cover the first side 21 of the support framework 2, preferably fixed to the first support uprights 210.

Advantageously, in addition, the plurality of cover panels 3 comprises at least one second lateral panel 32 fixed to cover the second side 22 of the support framework 2, preferably fixed to the second support uprights 220.

Advantageously, in addition, the plurality of cover panels 3 comprises at least one upper panel 33 fixed to cover the first pitched roof 23 of the support framework 2, preferably fixed to the first tilted profiles 27.

Advantageously, in addition, the plurality of cover panels 3 comprises at least one front panel 34 and a rear panel 35, which are placed to join together the first side 21 and the second side 22 of the support framework 2, on opposite sides of the support framework 2 itself.

Of course, the terms "frontal" and "rear" are used, for example only for the sake of description clarity, since the front and the rear of the greenhouse 1 are interchangeable, rotating 180° around a vertical axis.

In particular, the front panel 34 is constrained, preferably hinged, to one of the first support uprights 210 or of the second support uprights 220 placed frontal. In this manner, the front panel 34 can be opened and usable in order to access within the greenhouse 1. In accordance with an embodiment variant, two front panels 34 are present, each hinged to a corresponding first support upright 210 and second support upright 220 placed frontal.

In addition, the rear panel 35 is constrained, preferably hinged, to one of the first support uprights 210 or of the second support uprights 220 placed to the rear. In this manner, also the rear panel 35 is openable and usable for accessing within the greenhouse 1. In accordance with an embodiment variant, two rear panels 35 are present, each hinged to a corresponding first support upright 210 and second support upright 220 placed to the rear.

Of course, without departing from the protective scope of the present invention, the front panel 34 and the rear panel 35 can be made in any other way in order to allow the access to the greenhouse. For example, the front 34 and rear 35 panel/panels can be foldable as bellows or slidably, or they can provide for through openings in which access doors are embedded.

Of course, in addition, at the same rate it is possible to provide for one or more accesses along the first side 21 and/or the second side 22 of the greenhouse 1 (i.e. on the first lateral panel 31 and/or on the second lateral panel 32).

Preferably, at least one and preferably all the cover panels 3 are made of plastic material or glass, still more preferably made of polycarbonate. The latter material is indeed resistant to hail, to UV rays and has a high durability. An important advantage of polycarbonate is that it retains heat very well, contributing to creating an ideal microclimate for the plants, and is therefore ideal for use in the greenhouse 1 according to the preferred embodiment of the invention. Its lightness also facilitates the attainment of the structure, as well as a possible substitution of the cover panels 3 in case of need. In addition, the use of polycarbonate is eco-sustainable, since it has a long duration and the cover panels 3 are completely recyclable. Advantageously, the greenhouse 1 also comprises at least one support panel 30, which is fixed to the support framework 2 to cover the second pitched roof 24. More in detail, the support panel 30 is fixed to the second tilted profiles 28. In addition, the support panel 30 is preferably placed to completely cover the second tilted profiles 28 in order to insulate them and prevent the formation of heat bridges.

Advantageously, the support panel 30 is made of an insulating multilayer material, in particular opaque.

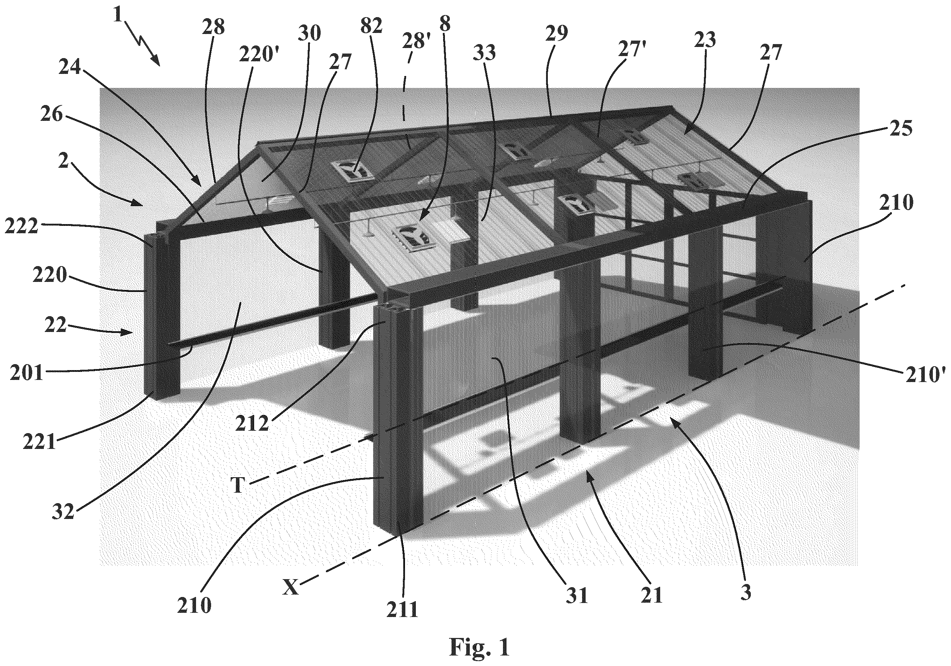

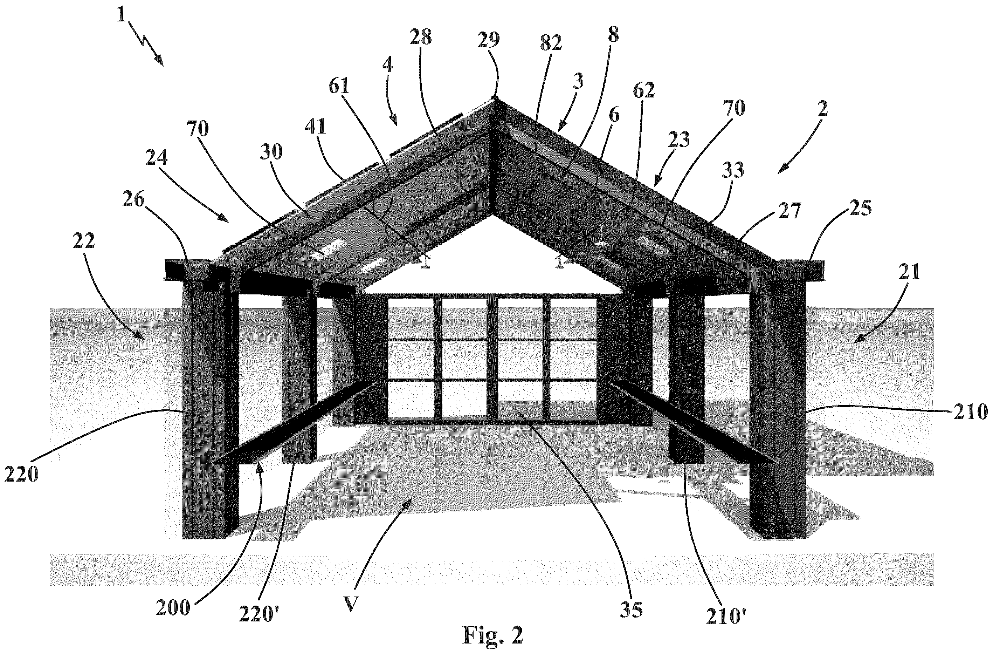

In accordance with a first embodiment variant of the present invention, illustrated in figure 1 and 2, the greenhouse 1 comprises only one support framework 2, i.e. only one pitched roof truss, and therefore such support framework 2 is entirely covered perimetrically, i.e. enclosed, by the cover panels 3.

In this manner, the complete environmental air seal is advantageously obtained, i.e. of the internal volume V of the greenhouse 1. For such purpose, also suitable gaskets between the cover panels 3 and the support framework 2 are thus advantageously provided for.

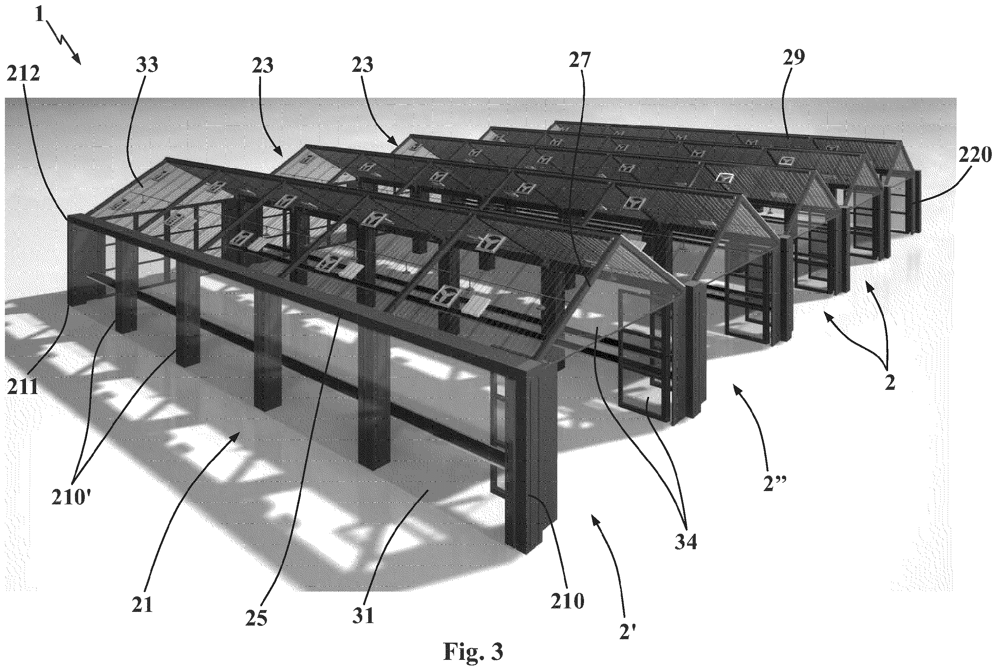

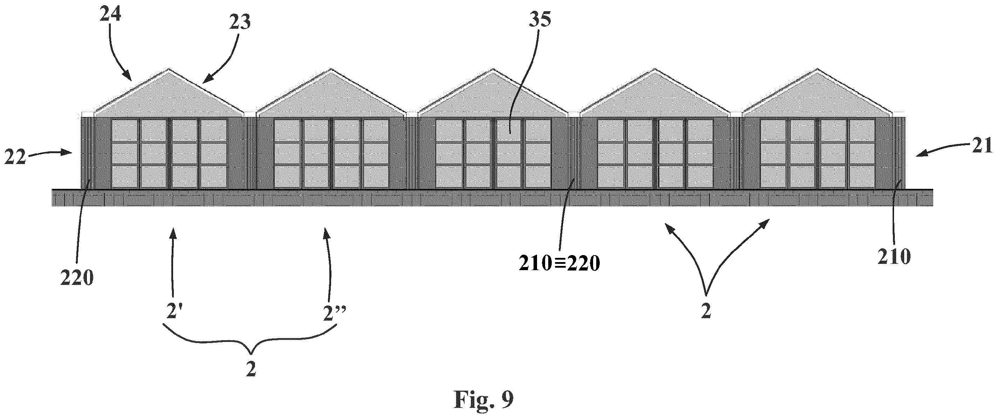

In accordance with a second embodiment variant of the present invention, illustrated in figures 3-9, the greenhouse 1 comprises at least two support frameworks 2 facing each other with their main extension directions X parallel.

In particular, the second side 22 of a first 2' of the two support frameworks 2 is in common with the first side 21 of an adjacent second 2" of the two support frameworks 2, and the plurality of cover panels 3 comprises at least one between a first lateral panel 31 fixed to cover the first side 21 of the first support framework 2' and a second lateral panel 32 fixed to cover the second side 22 of the adjacent second support framework 2".

More clearly, therefore in the event in which the greenhouse 1 comprises two or more support frameworks 2, i.e. multiple pitched roof trusses, facing each other so as to define a single structure, the cover panels might not cover each side 21, 22 of each support framework 2, but only the sides 21, 22 of the support frameworks 2 placed externally, so as to cover only the external perimeter of the greenhouse 1 and obtaining a single covered environment.

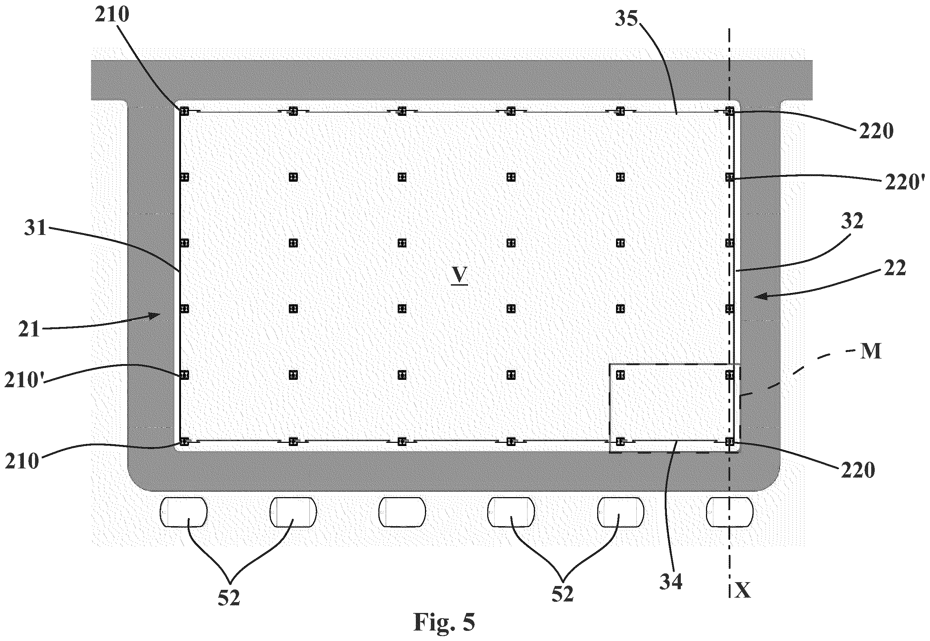

In this manner, the greenhouse 1 is substantially modular, being able to vary - depending on the structural needs - the length of the greenhouse 1 itself along the main extension direction X, for example by varying the distance between the support uprights 210, 220 of a same side and the quantity of intermediate uprights 210', 220' interposed therebetween. In addition, it is possible to vary the quantity of facing support frameworks 2, 2', 2". A single module M which can be spatially repeated is for example shown in figure 5.

Of course, the cover panels 3 can also be placed on the sides 21, 22 between two support frameworks 2 in order to maintain multiple internal volumes V separated, for example if it is desired to recreate different environmental conditions.

In accordance with the idea underlying the present invention, the greenhouse also comprises energy supply means 4, comprising at least one photovoltaic module 41, which is mounted on the second pitched roof 24 in order to be exposed to sunrays and intended to convert the energy of the sunrays into electrical energy. For example the photovoltaic module 41 is about 615 Watt.

In particular, the photovoltaic module 41 is mounted on the support panel 30, for example fixed to the latter by means of suitable brackets (not illustrated in the enclosed figures).

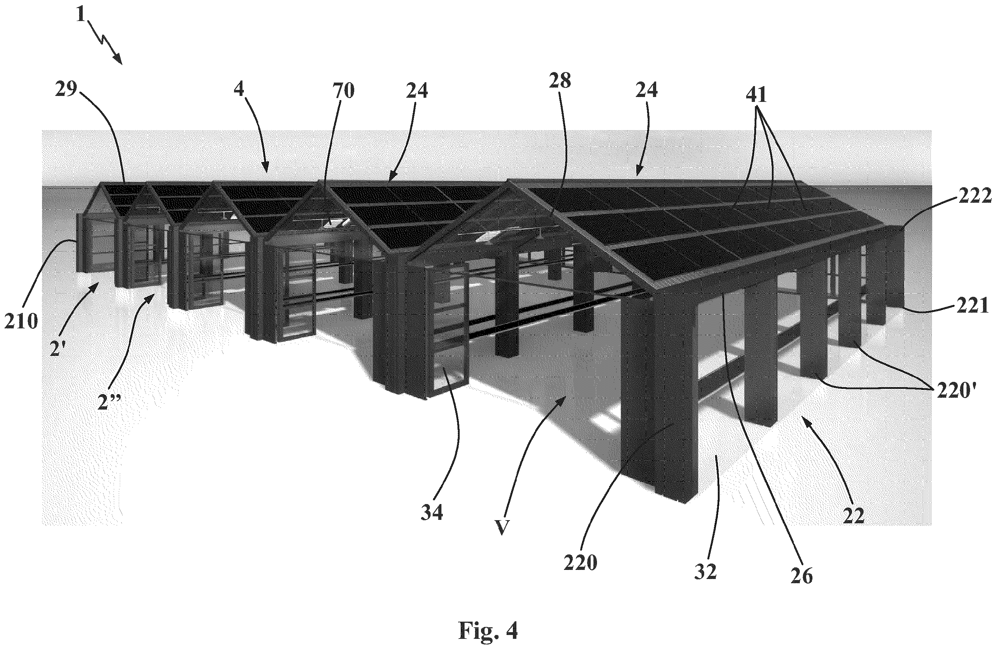

Preferably, the energy supply means 4 comprise a plurality of photovoltaic modules 41 in order to cover the entire second pitched roof 24, as is visible for example in figure 4.

In accordance with the preferred embodiment of the invention, the energy supply means 4 comprise at least one energy storage device, e.g. a battery, electrically connected to the photovoltaic module 41 in order to store the electrical energy generated by the photovoltaic module 41 itself.

Preferably, the energy storage device is placed inside the internal volume V of the greenhouse 1.

Advantageously, the energy supply means 4 are also connected to a power grid at least in order to introduce, in such power grid, the electrical energy generated in excess, not used and/or not stored in the energy storage device.

According to the invention, the greenhouse also comprises water recovery means 5, arranged for recovering rainwater, and/or water extraction means 50, arranged for extracting water from an aquifer F. Preferably, the greenhouse 1 comprises both such water recovery and extraction means 5, 50.

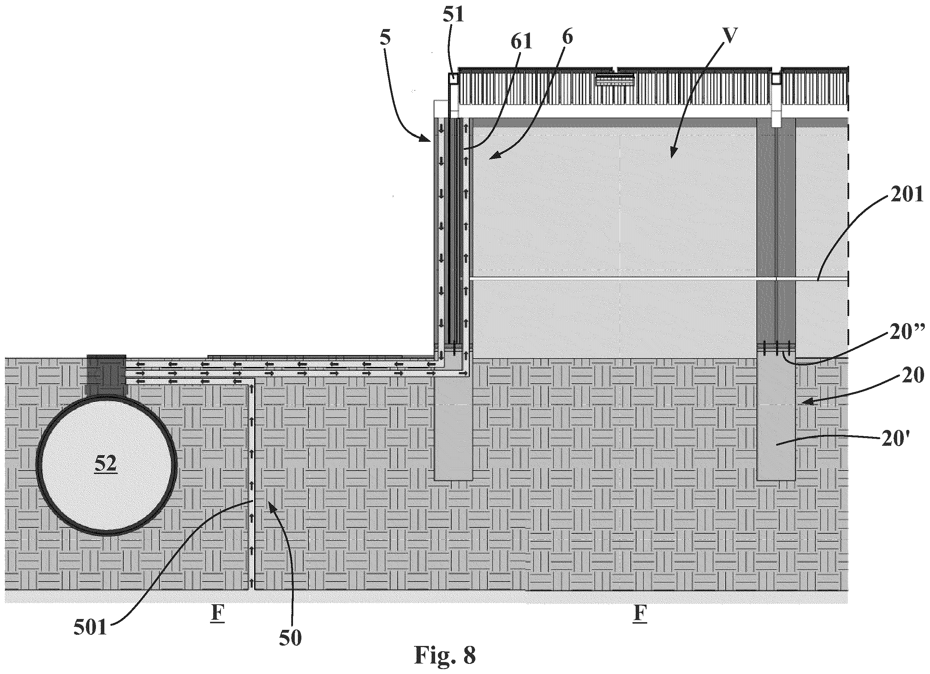

More in detail, the water recovery means 5 comprise one or more gutters 51, placed at the first and/or second lateral crosspiece 25, 26 and one or more uprights 210, 210', 220, 220', as illustrated for example in figures 6 and 8. Preferably, the gutters 51 are integrated in the support framework, i.e. they are integral with the first and/or second lateral crosspiece 25, 26 and with one or more uprights 210, 210', 220, 220'.

In addition, the water recovery means 5 advantageously comprise at least one storage tank 52, preferably intended to be embedded, in fluid communication with the aforesaid gutters 51, in order to collect the water that flows from the latter.

Of course, the water recovery means 5 are also arranged for recovering the condensation that forms, for example at night, outside of the cover panels 3 and that also in this case is intended to flow into the gutters 51.

Optionally, the water recovery means 5 comprise, in addition, a filtering device (not illustrated in the enclosed figures), arranged for filtering the collected water.

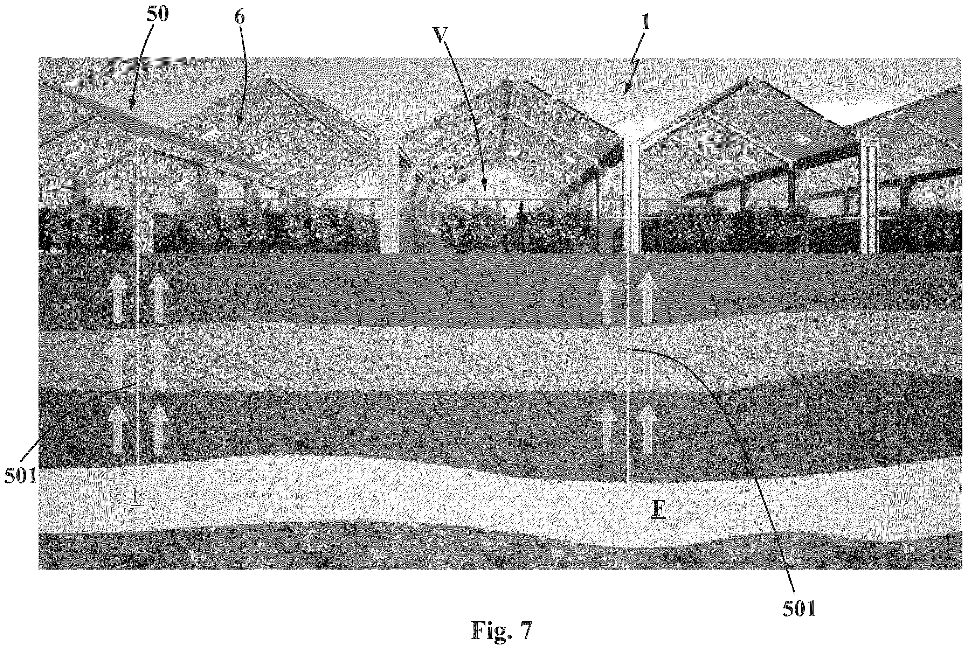

Advantageously, the water extraction means 50 comprise one or more pipes 501, intended to be placed in hydraulic communication with an aquifer F deep underground, as illustrated for example in figures 7 and 8.

Advantageously, in addition, the water extraction means 50 comprise one or more extraction pumps (not illustrated in the enclosed figures) placed to intercept the pipes 501, in order to suction the water from the aquifer F. Advantageously, the extraction pump is electrically connected to the energy supply means 4 in order to be power supplied by the latter.

Optionally, the water extraction means 50 are also in fluid communication with the storage tank 52 for the water recovery means 5 so as to store, in the latter, also water suctioned from the aquifer F, as illustrated in figure 8.

According to the invention, the greenhouse 1 also comprises an irrigation plant 6, placed at least partially within the internal volume V of the greenhouse 1, hydraulically connected to the water recovery means 5 and/or to said water extraction means 50, preferably both, and arranged for irrigating the plants placed in the greenhouse 1.

More in detail, the irrigation plant 6 comprises, in a per se known manner, a plurality of channels 61, in fluid communication with water recovery means 5 and/or with said water extraction means 50 intercepted by a plurality of dispensing mouths 62. In the enclosed figures, and in particular in figure 6, a "rain" irrigation plant is for example illustrated, fixed to the first pitched roof 23 and to the second pitched roof 24, in particular to the tilted profiles 27, 27', 28, 28'. Of course, without departing from the protective scope of the present invention, the irrigation plant 6 can also be an irrigation plant on the ground or of any other type. Advantageously, in addition, the irrigation plant 6 comprises one or more irrigation pumps (not illustrated in the enclosed figures) in fluid communication with the channels 61 of the irrigation plant 6 and with the storage tank 52 for the water recovery means 5 and/or the pipe 501 of the water extraction means 50. In particular, if only the water extraction means 50 are present, the irrigation pump can coincide with the extraction pump.

Advantageously, the irrigation pump is electrically connected to the energy supply means 4 in order to be power supplied by the latter.

According to the invention, the greenhouse 1 also comprises a heating plant 7, electrically powered at least partially by the energy supply means 4 and arranged for heating the internal volume V of the greenhouse 1.

More in detail, the heating plant 7 comprises one or more heat pumps (not illustrated in the enclosed figures) power supplied by the energy supply means 4.

According to the invention, the greenhouse 1 also comprises a ventilation plant 8, comprising at least one recirculation fan 81 for recirculating air within the internal volume V of the greenhouse 1, electrically power supplied at least partially by the energy supply means 4. Advantageously, the ventilation plant 8 also comprises at least one aeration grid 82, mounted at the first pitched roof 23 of the support framework 2 in order to selectively place in air communication the internal volume V with the greenhouse 1 exterior.

More in detail, as set forth above, the plurality of cover panels 3 comprises at least one upper panel 33, placed to cover said first pitched roof 23. In particular, at least one through opening is made on the upper panel 33.

Preferably, the aeration grid 82 is mounted on the upper panel 33, embedded in the through opening and is provided with a plurality of blades placed in series and rotatable between an open position, in which the internal volume V and the greenhouse 1 exterior are in air communication through the through opening, and a closed position, in which the blades are placed to close the through opening.

Advantageously, at least one recirculation fan 81 is mounted at the first pitched roof 23, in particular at the through opening of the upper panel 33, so as to force the entrance of the air into the internal volume V of the greenhouse 1. Preferably, the aeration grid 82 is superimposed on such recirculation fan 81, such to allow adjusting the entrance of air into the greenhouse 1 also with the opening and closing of the aeration grid 82.

Advantageously, in addition, the ventilation plant 8 comprises a dehumidification device 83, which is placed within the internal volume V of the greenhouse 1 and is arranged for removing the humidity of the air.

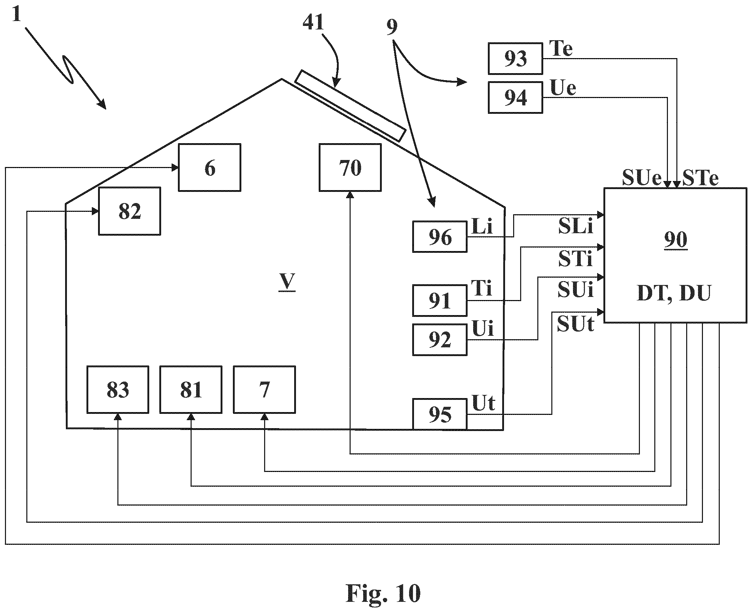

In accordance with the idea underlying the present invention, the greenhouse 1 also comprises an environment control system 9 comprising at least one first temperature sensor 91 and at least one first humidity sensor 92, schematically illustrated in figure 10.

In particular, the first temperature sensor 91 is placed inside the internal volume V of the greenhouse 1 and is configured for determining an internal temperature data Ti and generating a corresponding internal temperature signal STi.

In addition, the first humidity sensor 92 is placed inside the internal volume V of the greenhouse 1 and is configured for detecting internal environmental humidity data Ui and generating a corresponding internal humidity signal SUi.

According to the invention, the greenhouse 1 also comprises a logic control unit 90, which is placed in data connection at least with the environment control system 9, the heating plant 7 and the ventilation plant 8 and is configured for receiving the internal temperature signal STi and the internal humidity signal SUi and, on the basis at least of the internal temperature data Ti and of the internal humidity data Ui, controlling the actuation of the heating plant 7 and/or of the ventilation plant 8.

For example, the logic control unit 90 can actuate the heating plant 7 (by actuating the heat pump) and/or the ventilation plant 8 (by actuating the recirculation fan 81, the aeration grid 82 and/or the dehumidifier 83) when the internal temperature data Ti and/or the internal humidity data Ui exceed preset limit values on the basis of the cultivated plant, so as to bring such data back within a pre-established optimal interval.

In this manner, the greenhouse 1 according to the invention is arranged for being adapted to the needs of each cultivation type independent of the climate conditions outside of the greenhouse 1 itself, controlling internal temperature and humidity.

Therefore, it is possible to obtain a controlled internal microclimate, which allows having plants that are always productive year-round, even with extreme external conditions, such as extreme heat or cold.

In accordance with a preferred embodiment of the present invention, the environment control system 9 also comprising a second temperature sensor 93 and a second humidity sensor 94, schematically illustrated in figure 10.

In particular, the second temperature sensor 93 is placed outside the internal volume V of the greenhouse 1 and is configured for determining an external temperature data Te and generating a corresponding external temperature signal STe.

In addition, advantageously, the second humidity sensor (94) is placed outside the internal volume V of the greenhouse 1 and is configured for detecting an external environmental humidity data Ue and generating a corresponding external humidity signal SUe. Advantageously, the logic control unit 90 is configured for also receiving the external temperature signal STe and the external humidity signal SUe and calculating a temperature difference DT, between the external temperature data Te and the internal temperature data Ti, and a humidity difference DU, between the external humidity data Ue and the internal humidity data Ui.

In addition, the logic control unit 90 is advantageously configured for controlling, also on the basis at least of the temperature difference DT and of the humidity difference DU, the actuation of the heating plant 7 and/or of the ventilation plant 8.

For example, in such case the logic control unit 90 can establish if it is more convenient to actuate the heating plant 7 or the ventilation plant 8 based on the comparison of the temperature and humidity data.

In accordance with the preferred embodiment of the present invention, the environment control system 9 also comprises at least one third humidity sensor 95, schematically illustrated in figure 10, which is intended to be placed within the ground in which the plants are planted and is configured for determining a ground humidity data Ut and generating a corresponding ground humidity signal SUt.

Advantageously, the logic control unit 90 is placed in data connection also with said irrigation plant 6 and is configured for receiving the ground humidity signal SUt and, on the basis at least of the ground humidity data Ut, controlling the actuation of the irrigation plant 6.

In this manner, in operation, when the ground humidity data Ut is lower than a first preset ground humidity 9, the logic control unit 90 can actuate the irrigation plant 6.

In the event in which instead the ground humidity data Ut is higher than a second preset ground threshold value, the logic control unit 90 can actuate the heating plant 7 or the ventilation plant 8 in order to remove the humidity from the ground.

In accordance with the preferred embodiment of the present invention, the greenhouse 1 also comprises illumination means 70 placed within the internal volume V of the greenhouse 1 and electrically power supplied at least partially by the energy supply means 4. In particular, the illumination means 70 comprise LED lamps, preferably infrared, still more preferably of the type known as "grow light", capable of balancing hot and cold light of the LEDs in order to accurately reproduce the natural light.

In addition, the illumination means 70 are advantageously placed below the second pitched roof 24 and preferably also the first pitched roof 23, and advantageously fixed to the relative tilted profiles 27, 27', 28, 28'.

Advantageously, the environment control system 9 also comprises at least one brightness sensor 96, for example a twilight sensor, illustrated schematically in figure 10, which is intended to be placed within the internal volume V of the greenhouse 1 and is configured for determining internal brightness data Li and generating a corresponding internal brightness signal SLi.

In addition, the logic control unit 90 is advantageously placed in data connection also with the illumination means 70 and is configured for receiving the internal brightness signal SLi and, on the basis at least of the internal brightness data Li, controlling the actuation of the illumination means 70.

In this manner, it is possible to make up for poor or non-uniform external light environmental conditions. In addition, it is possible to provide a perfect artificial solar light, which the plants require in order to grow, contributing to a healthy and vigorous growth, as if outside.

Preferably, the logic control unit 90 can be completely managed remotely. For such purpose, the logic control unit 90 is advantageously connected to an Internet network, to which also one or more of the utilities (such as for example the water recovery means 5, the water extraction means 50, the irrigation plant 6, the heating plant 7, the ventilation plant 8, the environment control system 9 and the illumination means 70) can be connected in a manner such that also the latter can be controlled by the logic control unit 90 or directly by a user without requiring a connection via cable.

In accordance with the preferred embodiment of the present invention, the greenhouse 1 also comprises movement means 200, which are placed at least partially within the internal volume V of said greenhouse 1, preferably completely within such internal volume V, and comprise at least one conveyor belt 201, extended along a transport direction T, preferably parallel to the main extension direction X.

In particular, the conveyor belt 201 is extended at the first and/or the second side 21, 22 of the greenhouse 1. Of course, it is possible to provide for multiple conveyor belts 201 based on the production needs.

Advantageously, the conveyor belt 201 allows moving farming products inside or towards the outside of the greenhouse 1 with greater ease, speed and lower work force.

The invention thus conceived, in accordance with the preferred embodiment, is capable of ensuring the recreation of an ideal controlled microclimate within the greenhouse 1, allowing the cultivation year-round. In order to obtain the maximum yield of the cultivations, the environment control system 9 advantageously allows the microclimate management of the internal volume V and always ensures ideal temperatures and humidity, even with adverse external conditions. This microclimate is also adjustable based on the type of culture selected by means of a remote plant adjustment system, which interacts with the logic control unit 90. In addition, such greenhouse 1 is preferably only power supplied with electric current produced by the photovoltaic modules 41 installed on the second pitched roof 24, thus lowering the external electrical supply required, in particular from non-renewable sources, hence reducing the environmental impact. In addition, such greenhouse 1 is preferably hydraulically supplied only by the water recovery means 5 and/or by the water extraction means 50.

In this manner, the greenhouse 1 is advantageously intended to be self-sufficient at least in terms of energy and water supply.

In addition, the entire structure of the greenhouse 1, i.e. in particular the support framework 2 and the cover panels 3, has a sustainable life-cycle due to the use of selected materials (in particular preferably aluminum and polycarbonate) which at the end of an average lifetime of the greenhouse 1 of about 30 years can be easily recycled or reused. In addition, the support framework 2 and the cover panels 3 in accordance with the preferred embodiment ensure the protection from hail and an optimal natural irradiation for the cultivations.

In addition, the greenhouse 1 is advantageously structurally modular, in accordance with the described embodiment variants, allowing being adapted to the needs of the farmer and of the terrain due to the completeness of each single module.

Also forming the object of the present invention is a process for installing a greenhouse 1 for cultivating plants of the above-described type, regarding which the same reference numbers will be maintained for the sake of descriptive clarity.

The process, object of the invention, comprises a first fixing step, in which the support framework 2 is fixed to the ground, with the first pitched roof 23 directed in north direction and the second pitched roof 24 directed in south direction.

More in detail, in the first fixing step, the fixing elements 20 are initially fixed in the ground, and fixed thereto are the corresponding uprights 210, 210', 220, 220', with the panels made of plastic material advantageously interposed. Advantageously fixed on the uprights 210, 210', 220, 220' are the first and the second lateral crosspieces 25, 26, the tilted profiles 27, 27', 28, 28', and the top crosspiece 29.

The process according to the invention also comprises a second fixing step, in which the plurality of cover panels 3 is fixed to the support framework 2 to cover at least the first pitched roof 23 and with at least one between the first side 21 and the second side 22.

Of course, in such second fixing step, all the cover panels 3 are advantageously fixed which are deemed necessary for the complete closure of the support framework 2 (or of the support frameworks 2, 2', 2" if the structure is composed of multiple modules).

Advantageously, in the second fixing step, also fixed to the second pitched roof 24 is the support panel 30.

The process also comprises a mounting step, in which the at least one photovoltaic module 41 of the energy supply means 4 is mounted on the second pitched roof 24 directed substantially southward. In particular, the photovoltaic module 41 is fixed to the support panel 30, for example by means of brackets of known type.

In this manner, it is possible to obtain greater energy efficiency, since the photovoltaic module 41 has the best exposure for being irradiated by the sunrays. Such condition is further improved by the improved tilt of the second pitched roof 24, which as stated above is preferably comprised between 20 and 40°, and still more preferably is about 30°.

In the mounting step, also the energy storage device advantageously installed and connected electrically to the photovoltaic module 41.

The process according to the invention also comprises a water installation step, in which the water recovery means 5 and/or the water extraction means 50 are installed, together with the irrigation plant 6. In addition, in the water installation step, the irrigation plant 6 is hydraulically connected to the water recovery means 5 and/or to the water extraction means 50, preferably to both.

The process also comprises a utility installation step, in which the heating plant 7 and the ventilation plant 8 are installed. In addition, in the utility installation step, the heating plant 7 and the recirculation fan 81 of the ventilation plant 8 are electrically connected to the energy supply means 4.

Advantageously, in the utility installation step, the aeration grid 82 of the aeration plant 8 is also installed.

Advantageously, in the utility installation step, the dehumidification device 83 of the aeration plant 8 is also installed.

Advantageously, in addition, in the utility installation step, the illumination means 70 are installed.

The process according to the invention also comprises a sensor installation step, in which the environment control system 9 is installed and connected to the logic control unit 90.

Advantageously, in the sensor installation step, one or more of the following are placed in data communication with the logic control unit: the water recovery means 5, the water extraction means 50, the irrigation plant 6, the heating plant 7, the ventilation plant 8, the environment control system 9 and the illumination means 70.

Of course, without departing from the protective scope of the invention, the order of the steps of the process can be varied, where possible, with respect to the above-indicated order, in accordance with the needs of the user or builder. In addition, several steps can even be carried out simultaneously.

The process is therefore advantageously simple and quick to actuate, also by virtue of the modularity of the structure.

The invention thus conceived therefore attains the pre-established objects.

## Claims

1. Greenhouse (1) for cultivating plants, which comprises:
- a support framework (2), which is intended to be fixed to the ground, defines an internal volume (V) and comprises:
- a first side (21) and a second side (22), extended substantially perpendicular to the ground and parallel to each other and to a main extension direction (X);
- a first pitched roof (23), which is extended from said first side (21) and is tilted with a first tilt angle (α1);
- a second pitched roof (24), which is extended from said second side (22) and is tilted with a second tilt angle (α2);
in which said first pitched roof (23) and said second pitched roof (24) are tilted towards each other and said first tilt angle (α1) is opposite said second tilt angle (α2);
- a plurality of transparent or translucent cover panels (3), fixed to said support framework (2) at least to cover said first pitched roof (23) and with at least one between said first side (21) and said second side (22);
- water recovery means (5), arranged for recovering rainwater, and/or water extraction means (50), arranged for extracting water from an aquifer (F);
- an irrigation plant (6), placed at least partially within the internal volume (V) of said greenhouse (1), hydraulically connected to said water recovery means (5) and/or to said water extraction means (50) and arranged for irrigating the plants placed in said greenhouse (1);
said greenhouse being **characterized in that** it also comprises:
- at least one support panel (30), which is fixed to the support framework (29) to cover the second pitched roof (24);
- energy supply means (4), comprising at least one photovoltaic module (41), which is mounted on said second pitched roof (24) in order to be exposed to sunrays and intended to convert the energy of said sunrays into electrical energy; said at least one photovoltaic module (41) being mounted on said support panel (30);
- a heating plant (7), electrically powered at least partially by said energy supply means (4) and arranged for heating the internal volume (V) of said greenhouse (1);
- a ventilation plant (8), comprising at least one (81) for the air within the internal volume (V) of said greenhouse (1), electrically power supplied at least partially by said energy supply means (4);
- an environment control system (9) comprising:
- at least one first temperature sensor (91), placed inside the internal volume (V) of said greenhouse (1) and configured for determining internal temperature data (Ti) and generating a corresponding internal temperature signal (STi);
- at least one first humidity sensor (92), placed inside the internal volume (V) of said greenhouse (1) and configured for detecting internal environment humidity data (Ui) and generating a corresponding internal humidity signal (SUi);
- a logic control unit (90), which is placed in data connection at least with said environment control system (9), said heating plant (7) and said ventilation plant (8) and is configured for:
- receiving said internal temperature signal (STi) and said internal humidity signal (SUi); and
- on the basis at least of said internal temperature data (Ti) and of said internal humidity data (Ui), controlling the actuation of said heating plant (7) and/or said ventilation plant (8).

2. Greenhouse (1) for cultivating plants according to claim 1, **characterized in that** said ventilation plant (8) also comprises at least one aeration grid (82), mounted at said first pitched roof (23) of said support framework (2) in order to selectively place in air communication said internal volume (V) with the outside of said greenhouse (1).

3. Greenhouse (1) for cultivating plants according to claim 2, **characterized in that** said recirculation fan (81) is mounted at the first pitched roof (23) and the aeration grid (82) is superimposed on said recirculation fan (81).

4. Greenhouse (1) for cultivating plants according to any one of the preceding claims, **characterized in that** said at least one support panel (30) is made of an insulating multilayer material, in particular opaque.

5. Greenhouse (1) for cultivating plants according to any one of the preceding claims, **characterized in that** said support framework (2) comprises:
- at least two first support uprights (210), each of which extended between a first lower end (211) thereof, intended to be fixed to the ground, and an opposite first upper end (212), and defining between them said first side (21);
- at least two second support uprights (220), each of which extended between a second lower end (221) thereof, intended to be fixed to the ground, and an opposite second upper end (222), and defining between them said second side (22);
- at least one first lateral crosspiece (25) and one second lateral crosspiece (26), placed parallel to each other and placed to respectively connect the first upper ends (212) of said first support uprights (210) and the second upper ends (222) of said second support uprights (220);
- at least two first tilted profiles (27), mechanically connected to the first lateral crosspiece (25) and defining said first pitched roof (23);
- at least two second tilted profiles (28), mechanically connected to the second lateral crosspiece (26) and defining said second pitched roof (24);
in which said cover panels (3) are fixed at least to said first tilted profiles (27) and to said first support uprights (210) and/or said second support uprights (220), preferably placed to completely cover them.

6. Greenhouse (1) for cultivating plants according to any one of the preceding claims, **characterized in that** said environment control system (9) also comprising:
- a second temperature sensor (93), placed outside the internal volume (V) of said greenhouse (1) and configured for determining an external temperature data (Te) and generating a corresponding external temperature signal (STe);
- a second humidity sensor (94), placed outside the internal volume (V) of said greenhouse (1) and configured for detecting an external environment humidity data (Ue) and generating a corresponding external humidity signal (SUe);
in which said one logic control unit (90) is configured for:
- also receiving said external temperature signal (STe) and said external humidity signal (SUe);
- calculating a temperature difference (DT) between said external temperature data (Te) and said internal temperature data (Ti), and a humidity difference (DU), between said external humidity data (Ue) and said internal humidity data (Ui);
- also on the basis at least of said temperature difference (DT) and of said humidity difference (DU), controlling the actuation of said heating plant (7) and/or said ventilation plant (8).

7. Greenhouse (1) for cultivating plants according to any one of the preceding claims, **characterized in that** said environment control system (9) also comprises at least one third humidity sensor (95), which is intended to be placed within the ground in which the plants are planted and is configured for determining humidity data of the ground (Ut) and generating corresponding humidity signal of the ground (SUt);
in which said logic control unit (90) is placed in data connection also with said irrigation plant (6) and is configured for:
- receiving said humidity signal of the ground (SUt); and
- on the basis at least of said humidity data of the ground (Ut), controlling the actuation of said irrigation plant (6).

8. Greenhouse (1) for cultivating plants according to any one of the preceding claims, **characterized in that** it also comprises illumination means (70) placed within the internal volume (V) of said greenhouse (1) and electrically power supplied at least partially by said energy supply means (4);
said environment control system (9) also comprising at least one brightness sensor (96), which is intended to be placed within the internal volume (V) of said greenhouse (1) and is configured for determining internal brightness data (Li) and generating a corresponding internal brightness signal (SLi);
in which said logic control unit (90) is placed in data connection also with said illumination means (70) and is configured for:
- receiving said internal brightness signal (SLi); and
- on the basis at least of said internal brightness data (Li), controlling the actuation of said illumination means (70).

9. Greenhouse (1) for cultivating plants according to any one of the preceding claims, **characterized in that** it comprises movement means (200), which are placed at least partially within the internal volume (V) of said greenhouse (1) and comprise a conveyor belt (201), extended along a transport direction (T), preferably parallel to the main extension direction (X).

10. Greenhouse (1) for cultivating plants according to any one of the preceding claims, **characterized in that** said energy supply means (4) comprise at least one energy storage device, electrically connected to said at least one photovoltaic module (41) in order to store the electrical energy generated by said at least one photovoltaic module (41).

11. Greenhouse (1) for cultivating plants according to any one of the preceding claims, **characterized in that** it comprises at least two support frameworks (2) facing each other with their main extension directions (X) parallel;
in which the second side (22) of a first (2') of said at least two support frameworks (2) is in common with the first side (21) of a second (2") adjacent support framework of said at least two support frameworks (2), and
in which said plurality of cover panels (3) comprises at least one between a first lateral panel (31) fixed to cover the first side (21) of the first support framework (2') and a second lateral panel (32) fixed to cover the second side (22) of the adjacent second support framework (2").

12. Process for installing a greenhouse (1) for cultivating plants according to any one of the preceding claims, **characterized in that** it comprises:
- a first fixing step, in which said support framework (2) is fixed to the ground, with said first pitched roof (23) directed in north direction and said second pitched roof (24) directed in south direction;
- a second fixing step, in which said plurality of cover panels (3) is fixed to said support framework (2) to cover at least said first pitched roof (23) and at least one between said first side (21) and said second side (22);
- a mounting step, in which the at least one photovoltaic module (41) of said energy supply means (4) is mounted on said second pitched roof (24) directed substantially southward;
- a water installation step, in which said water recovery means (5) and/or said water extraction means (50) are installed, together with said irrigation plant (6); and in which said irrigation plant (6) is hydraulically connected to said water recovery means (5) and/or to said water extraction means (50);
- a utility installation step, in which said heating plant (7) and said ventilation plant (8) are installed; and in which said heating plant (7) and the recirculation fan (81) of said ventilation plant (8) are electrically connected to said energy supply means (4);
- a sensor installation step, in which said environment control system (9) is installed and connected to said logic control unit (90).
